# EUROPEAN PATENT APPLICATION

(11) **EP 4 141 083 A1**
(43) Date of publication of application: **01.03.2023**
(21) Application number: 22202914.2
(22) Date of filing: 21.03.2018
(51) Int. Cl.: C09J 133/08

(54) **AQUEOUS DISPERSIONS WITH HIGH STABILITY FOR ADHESIVES AND SEALANTS**

(30) Priority: 07.04.2017 EP 17165562
(62) Divisional of application: 18711365.9
(71) Applicant: Arkema France, 92700 Colombes (FR)
(72) Inventor: LUGLI, Mario, 42022 BORETTO (IT); AMADEI, Umberto, 42022 BORETTO (IT); FERRETTI, Simona, 42022 BORETTO (IT); PREMOLI, Andrea, 42022 BORETTO (IT); SAIJA, Leo Mario, 42022 BORETTO (IT)
(74) Representative: Arkema Patent

(57) **Abstract**

The present invention relates to an aqueous polymeric dispersion comprising emulsion polymerization polymeric particles having a monomeric composition comprising at least one monomer selected from acrylic, vinylic or allylic monomers and further comprising a mixture of surfactants comprising :
a) a phosphate surfactant selected from alkoxylated alkyl phosphate ester acids or salts, preferably alkoxylated alkyl phosphate monoester-diacids or salts or from alkoxylated alkyl diphosphate diester-monoacids or salts or a mixture of alkoxylated alkyl phosphate monoester-diacids or salts and alkoxylated alkyl diphosphate diester-monoacids or salts
and at least one of the following surfactants :
b) a surfactant selected from alkoxylated alcohol sulfate metal M salts
c) a surfactant selected from dialkyl C₄-C₁₈ diester and/or C₄-C₁₈ monoesters of sulfosuccinate metal M salts
and the polymer of said polymeric particles having a glass transition temperature Tg, as determined by DSC at a second passage at a heat rate of 20°C/min, which is lower than 0°C.

It also relates to its uses in adhesives or sealants and particularly, in pressure sensitive adhesives with improved stability at low and high temperature and/or under mechanical shear and a method for improving the stability of an aqueous polymer dispersion at low and high temperature and/or under mechanical shear.

## Description

The present invention relates to an aqueous polymeric dispersion comprising a specific mixture of surfactants with improved thermal stability (meaning at low and high temperature) and mechanical stability with respect to prior art dispersions and to its uses in adhesives and sealants, in particular in adhesives and more particularly in pressure sensitive adhesives (PSA). Said improved stability is obtained without significantly affecting the applicative performances. These aqueous polymeric dispersions are particularly suitable for use in adhesives and more particularly in pressure sensitive adhesives.

More specifically, it relates to an aqueous polymeric dispersion, which is stable at high solids content and more particularly in the absence of surfactants comprising an aromatic structure. By high solids is meant, according to the present invention, a solids content that is higher than 50% by weight. More particularly, the meaning of high solids content of the dispersions according to the present invention means that the solids content is higher than 55% and lower than 72% by weight. Of course, the present invention covers also aqueous dispersions with solids contents lower than 50% and in particular ranging from at least 30% by weight and up to 72% w/w with respect to the weight of the polymeric dispersion.

US 2009/0299004 discloses aqueous polymer dispersions for PSA where the said PSA have resistance to high shear when coated with high speed machines. The dispersions used comprise a mixture of surfactants comprising an ionic surfactant with a plurality of aromatic rings and an electronegative substituent formed from a strong acid (sulfo or phospho anion), optionally a non-ionic surfactant with a substituent comprising multiple hetero-organo units and optionally another (additional) ionic surfactant according to the definition of the 1^{st} ionic surfactant. At least, one ionic aromatic surfactant is present.

EP 0952 161 discloses a polymeric dispersion, which can be used in coatings, impregnations and adhesives comprising as emulsifying system a mixture of an aromatic anionic surfactant with two aromatic rings and bearing sulfo groups, with a second anionic surfactant selected from alkoxylated alkyl sulfates. According to this document, the presence of the two surfactants increases the cohesion of the obtained coating (or adhesive) and the stability of the used dispersion. The presence of an aromatic anionic surfactant in the emulsifying system is again essential according to this document.

US 5,492,950 relates to PSA obtained from emulsions of acrylic polymers with a 1^{st} emulsion acrylic polymer being tackified by the addition of a 2^{nd} emulsion acrylic polymer. The said PSA have excellent adhesion on wide variety of surfaces. As an emulsifying system for the emulsions is disclosed a mixture of a 1^{st} anionic surfactant which is a sodium alkyl ether sulfate (alkoxylated alkyl sulfate) and a 2^{nd} anionic surfactant which is a sodium dialkyl sulfosuccinate. None phosphated surfactant as required in the present invention is neither disclosed nor taught.

The present invention overcomes the disadvantages of prior art aqueous polymeric dispersions for adhesives and sealants by improving the stability of the aqueous polymeric dispersions in terms of higher stability at low and high temperatures (this stability related to temperature being also defined as thermal stability and/or higher mechanical stability under shear, in particular, in spite of the high solids content of the aqueous polymeric dispersions according to the present invention and while having satisfactory applicative performances in adhesives or sealants, more particularly in adhesives and preferably in PSA adhesives.

"Stability at low temperature" according to the present invention is measured by the variation of characteristics (such as viscosity, dry coagulum and particle size) after a freeze thaw stability test consisting of submitting the aqueous polymer dispersion according to the present invention to 2 successive cycles, each cycle consisting of 16 hours at -5°C ± 1°C followed by 8 hours at 23°C (see more details of the test in experimental part).

"Stability at high temperature" according to the present invention is measured by same variation of characteristics after 2 weeks of storage of the dispersion according to the present invention, at a temperature of 60°C ± 1°C (see experimental part for detailed test).

The "stability at low temperature" and "stability at high temperature" tests (otherwise called thermal stability tests) or criteria are representative of the conditions of use, of storage or of transportation at respectively low and high temperature climatic conditions.

The mechanical stability (under shear) relates to the same variation of characteristics (viscosity, dry coagulum and particle size) after submitting the polymeric dispersion to high shear conditions. "High shear conditions" are represented by a rotational speed higher than 3000 rpm for at least 10 minutes (detailed conditions of the high shear test according to the invention are disclosed in the experimental part).

The characteristics such as viscosity, dry coagulum and particle size measured for estimating the thermal and mechanical stability of the dispersion according to the present invention are measured according to the tests as disclosed in the experimental part.

The high mechanical stability under shear as defined above is required for the dispersion of the present invention in order to overcome the high shear processing conditions faced in its use in adhesives or sealants applications.

The polymeric dispersions of the present invention lead to the above-mentioned performances essentially by using at least a binary combination among three specific surfactants and more particularly their ternary combination. Preferably, this combination of surfactants is also combined with a specific combination of monomers for obtaining the polymer of said aqueous polymeric dispersion according to the present invention.

The first subject-matter covered by the present invention relates to the said aqueous polymeric dispersion comprising as an emulsifying system a mixture among three specific surfactants.

The second subject-matter relates to the use of said aqueous polymeric dispersions in adhesives or sealants, in particular in adhesives, preferably in pressure sensitive adhesive compositions.

A third subject matter of the invention relates to a method for improving the thermal stability (stability at low and high temperature as defined above) and/or the mechanical stability under shear, with respect to comparative dispersions, which method comprises preparing said aqueous polymer dispersion by an emulsion polymerization by using as an emulsifying system the combination of the three specific surfactants.

More specifically, the first subject-matter relates to an aqueous polymeric dispersion, which comprises emulsion polymerization polymeric particles having a monomeric composition comprising at least one monomer selected from acrylic and vinylic monomers and further comprising a mixture of surfactants comprising :
a) a phosphate surfactant selected from alkoxylated alkyl phosphate ester acids or salts, preferably alkoxylated alkyl phosphate monoester-diacids or salts or from alkoxylated alkyl diphosphate diester-monoacids or salts or a mixture of alkoxylated alkyl phosphate monoester-diacids or salts and alkoxylated alkyl diphosphate diester-monoacids or salts
and at least one of the following surfactants :
b) a surfactant selected from alkoxylated alcohol sulfate metal M salts
c) a surfactant selected from C₄-C₁₈ dialkyl diesters and/or C₄-C₁₈ mono alkyl esters of sulfonated C₄-C₈ dicarboxylic acid metal M salts
the polymer of said polymeric particles having a glass transition temperature Tg, as determined by DSC at a second passage at a heat rate of 20°C/min, which is lower than 0°C.

This means that the polymer dispersion of the present invention has a single Tg and a single polymeric phase. Consequently is excluded from the present invention a polymer dispersion with structured particles. A structured polymeric particle comprises at least two incompatible polymeric phases with two different Tgs.

According to one embodiment of the invention in the said aqueous dispersion, the said mixture of surfactants comprises a) and b) preferably with a weight ratio a) / b) varying from 10/90 to 90/10, more preferably from 15/85 to 85/15 and even more preferably from 25/75 to 75/25.

According to another embodiment, the said mixture of surfactants comprises a) and c), preferably with a weight ratio a) / c) varying from 10/90 to 90/10, more preferably from 15/85 to 85/15 and even more preferably from 25/75 to 75/25.

In still another alternative embodiment, the said mixture of surfactants comprises a), b) and c), preferably with a weight ratio a) / c) varying from 10/90 to 90/10, more preferably from 15/85 to 85/15 and even more preferably from 25/75 to 75/25.

The said polymeric dispersion of the invention has a solids content from 30 to 72% w/w, preferably from 40 to 72% w/w and more preferably higher than 50% w/w and up to 72% w/w with respect to the total weight of said dispersion.

The said aqueous polymer dispersion according to the invention preferably does not contain any surfactant comprising an aromatic structure.

According to particularly preferred embodiment of the present invention the said mixture of surfactants comprises all three surfactants a), b) and c) as defined above and further defined below.

According to another particular option of the present invention, none of the surfactants a), b) or c) comprises any polymerisable unsaturated group.

As defined above, the said surfactant b) is selected from alkoxylated alcohol sulfate metal M salts. Preferably, the said alcohol in said surfactant b) is selected from C₈-C₂₂, preferably C₁₀-C₁₈ alcohols. The said alcohol is alkoxylated, preferably with 1 to 50, preferably 2 to 40, more preferably 4 to 30 alkoxy units selected from ethoxy, propoxy or their mixture. More preferably, the number of alkoxy units ranges from 3 to 30 and more particularly from 5 to 25.

As defined above, surfactant c) is selected from C₄-C₁₈ dialkyl diesters and/or C₄-C₁₈ mono alkyl esters of sulfonated C₄-C₈dicarboxylic acid metal M salts. More particularly, said surfactant c) is selected from C₄-C₁₃ dialkyl diester or C₄-C₁₃ mono alkyl ester of sulfosuccinate metal M salts, preferably from C₆-C₁₃ dialkyl diester or C₆-C₁₃ mono alkyl ester of sulfosuccinate metal M salts.

According to a more particular embodiment of the invention concerning the polymer of said polymeric particles has a glass transition temperature Tg, as determined by DSC at a second passage at a heat rate of 20°C/min, which is at most -10°C, preferably ranges from -65 to -10°C and more preferably from -65°C to -20°C.

Concerning the said surfactant a) as defined above, the said alkyl is in C₈ to C₂₂, preferably is in C₁₀ to C₁₈, more preferably is in C₁₀ to C₁₆.

More particularly, said alkoxylated alkyl in surfactant a) comprises from 2 to 50 alkoxy units, preferably from 2 to 40 and more preferably 2 to 30 alkoxy units. Preferably, said alkoxy unit is selected from ethoxy units.

Concerning said alkoxylated alkyl phosphate salts according to the definition of surfactant a), they are salts having a metal cation selected from potassium, sodium or they are salts having cation selected from ammonium issued from ammonia or from amines.

According to a particular preference, said surfactants a), b) and c) are sodium or ammonium salts.

More preferably, said surfactant a) is a phosphate diester (I) and/or monoester (II) according to the following formula :

[RO(R'O)ₙ]₂ - P(=O)-O⁻ M⁺ (diester)

RO(R'O)ₙ- P(=O) [-O⁻M⁺]₂ (monoester)

with
R being an alkyl in C₈ to C₂₂, preferably C₁₀ to C₁₈, more preferably from C₁₀ to C₁₆
R' being an alkylene from ethylene
n being 2 to 50, preferably from 2 to 40 and more preferably from 2 to 30
M being selected from : hydrogen, sodium, potassium or ammonium
preferably said surfactant a) being a mixture comprising from 30 to 40% w/w of diester (I) and from 60 to 70% w/w of monoester (II).

According to a particular preferred option, the aqueous polymer dispersion according to the invention has a solids content which is higher than 50% w/w, preferably higher than 55% and lower than 72% w/w.

Concerning the monomeric composition of the polymer particles of said aqueous polymeric dispersion, said polymeric particles comprise at least 50%, preferably at least 60%, more preferably at least 70% w/w monomeric units from an acrylic alkyl ester with an alkyl in C₄-C₁₀, preferably selected from n-, iso- or t-butyl acrylate, 2-ethyl hexyl acrylate, octyl acrylate or isooctyl acrylate, more preferably said alkyl being in C₈, meaning a more preferred selection from 2-ethyl hexyl acrylate, octyl acrylate or isooctyl acrylate.

More particularly, said polymeric particles further comprise from 0.1 to 6%, preferably from 0.2 to 4% w/w of monomeric units coming from an acidic and/or a hydroxylated monomer.

Suitable examples of such hydroxylated monomers (comonomers) are : hydroxyalkyl (meth)acrylates, preferably selected from hydroxy ethyl and hydroxyl propyl (meth)acrylates and more particularly hydroxy ethyl acrylate (HEA), hydroxy ethyl methacrylate (HEMA), hydroxypropyl acrylate (HPA) or hydroxypropyl methacrylate (HPMA).

Suitable examples of acidic monomers (comonomers) are : acrylic acid (AA), methacrylic acid (MAA), itaconic acid or 2-acrylamido 2-methyl propane sulfonic acid.

In addition, the said polymeric particles may further comprise at least one monomer selected from methyl or ethyl methacrylates, ethyl acrylate or butyl methacrylate or vinyl aromatic monomers, vinyl esters, maleate or fumarate esters or itaconate esters or their mixtures.

Another subject of the invention relates to the use of an aqueous polymer dispersion according to the invention as defined above in adhesives or in sealants, in particular in adhesives, preferably in pressure sensitive adhesive compositions. More particularly, said use is in adhesives for labels. More specifically, the aqueous dispersions according to the present invention can be used in removable adhesives, preferably in removable pressure sensitive adhesives. Removable adhesives in this context cover removable adhesive labels, including paper or plastic labels or removable PSA labels and tapes.

A "removable adhesive" according to the present invention means a PSA adhesive which is characterized by a low tack and a very low ultimate adhesion as defined below. The adhesive has enough tack to adhere a label securely to a substrate but it is also easily removed, with no adhesive residue left behind and no damage done to either the label or the substrate. Removable adhesives are used to make temporary labels, which can be used to label items for short periods of time before the label is removed because it is no longer needed or is out of date.

"Tack" is defined as the immediate holding power of the label adhesive on contact with a specific surface. If tack is low, it will have low adhesion, allowing the label to be removed cleanly. Adhesives with a low tack will build up adhesion over time (i.e. the difference between removable and repositionable).

"Ultimate Adhesion" is defined as the maximum holding power the label will achieve as the adhesive fully bonds to the surface. How long it takes for an adhesive to gain ultimate adhesion varies and depends on factors like the adhesive's stiffness, the roughness of the receiving surface and environmental conditions. Depending on those factors, it can take anywhere from 2 - 24 hours for ultimate adhesion to happen.

In fact "removable adhesives" are designed to form a temporary bond and ideally can be removed after months or years without leaving residue on the adherend (substrate). Removable adhesives are used in applications such as surface protection films, masking tapes, bookmark and note papers, barcodes labels, price marking labels, promotional graphics materials and for skin contact (wound care dressings, EKG electrodes, athletic tape, analgesic and transdermal drug patches, etc.). Some removable adhesives are designed to repeatedly stick and unstick.

In brief, "removable adhesives" can be defined as designed to form a temporary bond, which can be removed after months or years without leaving residue on the adherend (substrate).

As explained above, the dispersions of the present invention can also be used in sealants compositions for construction (building) applications, especially for concrete, plastic, stone or metal.

More preferably, the said dispersions are used for improved stability at low and high temperature (meaning improved thermal stability) and/or for improved stability under mechanical shear. The improvement is defined with respect to comparative dispersions without (not comprising) the mixture of surfactants as defined according to the present invention above. "Comparative dispersions" as defined in the present invention means, strictly comparative dispersions of prior art without the inventive combination of the three specific surfactants as defined according to the present invention (without combinations of surfactants a) + b), a) + c) or a) + b) +c) as defined above). The strict comparison is made between dispersions with (representative of the invention) and without (representative of prior art) said inventive mixture of surfactants a), b) and c) as defined above. More particularly, as comparative dispersion can be a dispersion representative of the closest prior art such as EP 0952 161, by replacing the phosphate surfactant a) as defined according to the present invention, by the dispersant of type I (like Dowfax^{®} 2A1 an aromatic disulfonate salt) as disclosed in EP 0952 161.

Finally, the present invention does also cover a method for improving the stability at low and high temperature and/or the stability under mechanical shear of an aqueous polymer dispersion (with respect to comparative dispersions), the said method comprising preparing said aqueous polymer dispersion by emulsion polymerization using as emulsifying system a mixture of surfactants comprising :
a) phosphate surfactant selected from alkoxylated alkyl phosphate ester acids or salts, preferably alkoxylated alkyl phosphate monoester-diacids or salts or from alkoxylated alkyl diphosphate diester-monoacids or salts or a mixture of alkoxylated alkyl phosphate monoester-diacids or salts and alkoxylated alkyl diphosphate diester-monoacids or salts
and at least one of the following surfactants :
b) a surfactant selected from alkoxylated alcohol sulfate metal M salts
c) a surfactant selected from dialkyl C₄-C₁₈ diester and/or C₄-C₁₈ monoesters of sulfosuccinate metal M salts.

The definition of "comparative dispersions" is the same as given above.

Preferably, in said method, said mixture of surfactants comprises a), b) and c) in particular with weight ratios :
- a) / b) varying from 10/90 to 90/10, preferably from 15/85 to 85/15, more preferably from 25/75 to 75/25 and
- c) / (a) +b)) varying from 5 to 60%, preferably from 10 to 50%, more preferably from 15 to 50%.

More particularly, said method further comprises the post-addition of at least one surfactant c) selected from C₄-C₁₈ dialkyl diester of sulfosuccinate metal M salts after the emulsion polymerization. Such a post-addition improves the wetting performances of the polymeric dispersion, while further contributing to the stability of said dispersion.

The aqueous dispersions of the present invention are prepared by a standard emulsion polymerization process with continuous addition of the pre emulsified monomeric composition comprising the said emulsifying system, to an aqueous solution of an emulsion initiator system, such as based on ammonium, sodium or potassium persulfate initiator. Red/ox (redox) initiator system can also be used for low polymerization temperatures, for example using ammonium or sodium persulfate combined with metabisulfite as reducer.

Said process may comprise a seed polymerization with a part of the pre emulsion of the monomers ranging from 1 to 10% or without seed polymerization.

The polymerization process may be a multistage emulsion polymerization process with at least two steps of polymerization of successively two different monomeric compositions.

During the emulsion polymerization, chain regulators such as mercaptans may be used for controlling the chain molecular weight of the resulting polymer. Examples of suitable mercaptans are n-dodecyl mercaptan (n-ddm) or tert-dodecyl mercaptan (tertddm). According to a particular option when the targeted solids content is higher than 60%, a bimodal or polymodal particle size distribution is specifically targeted for reducing viscosity. For example, it is possible to create a new generation of particles by adding a seed. Further conditions for a polymodal distribution can be found in WO 02/092637.

The following examples are given for the purpose of illustrating the invention and its performances and they do not at all limit the scope of the invention.

### EXPERIMENTAL PART AND EXAMPLES

**Table 1 : Raw materials used for the preparation of the polymeric dispersions**

| Designation | Description Supplier |
|---|---|
| Rhodafac^{®} RS710 E30 | Polyoxyethylene tridecyl phosphate ester in water solution, used as 26% w/w sodium salt solution (Solvay) |
| Aerosol^{®} A102 | Disodium ethoxylated alcohol [C₁₀-C₁₂] half ester of sulfosuccinic acid (Solvay) with 30-32% w/w solids |
| Disponil^{®} FES 77 | C₁₂-C₁₄ alcohol ether sulfate sodium salt (BASF) with 33% w/w solids |
| Dowfax^{®} 2A1 | Alkyl di phenyl ether di sulfonate sodium salt (DOW) with 45% w/w solids |
| 2 Ethyl Hexyl acrylate | Arkema |
| Methyl Methacrylate | Arkema |
| Butyl Acrylate | Arkema |
| N-dodecylmercaptane | Arkema |
| sodium persulfate | United Initiators |
| tert-butyl hydroperoxide | Arkema |
| Bruggolite^{®} FF6 | Sulfinic acid derivative, Brueggmann |
| Sodium Hydroxide | Arkema |
| Kemfoamex^{®} 6615 | Mineral Oil defoamer (Kemira) |

### Preparation of the aqueous dispersions according to the present invention and comparative examples

### Example 1 (invention)

928 g of deionized water are added in a glass reactor fitted with a condenser, a stirrer, a temperature control system and inlets for nitrogen, the initiator solutions and the pre-emulsion feed, respectively. A monomer pre-emulsion composed of 1911 g of deionized water, 104 g of Rhodafac^{®} RS710 E30 solution neutralized with sodium hydroxide at 26% solids, 58 g of Aerosol^{®} A102, 1254 g of 2 Ethyl Hexyl acrylate, 672 g of Methyl Methacrylate, 2508 g of Butyl Acrylate, 45 g of Acrylic acid and 4.12 g of N-dodecylmercaptane, is prepared in another container fitted with a stirrer (pre-emulsifier). When the contents of the reactor have reached a temperature of 81°C, 6.22 g of a 36% solids polystyrene seed with 30 nm particle size and then 32 g of a 7% sodium persulfate solution.

About two minutes after having added the initiators, the portion of the monomer pre-emulsion and 288 g of a 7% sodium persulfate solution are fed into the reactor at a constant feed rate, over a period of 3 hours, taking care to keep the contents of the reactor at a temperature of 84-86°C throughout all the introduction.

Then, the reaction mass is maintained at 84-86°C for a further 30 minutes, then 55 g of 13% tert-butyl hydroperoxide solution and 119 g of a 6% Bruggolite^{®} FF6 solution are feed separately into the reactor at 66°C over a period of 60 minutes at constant rate.

Ten minutes after the end of the above addition, the product obtained is cooled to 35°C, the pH is corrected with sodium hydroxide up to pH 7,0. Then the mixture is filtered through a screen of 36 mesh. The solids content of the dispersion is set between 55-57%.

The dispersion obtained has a pH of 7.3, a viscosity (Brookfield RVT at 20 rpm and at 23°C) of 60 mPa.s, a dry residue of 55.7% by weight (1 h at 105°C) and a pre-coagulate content on a screen of 275 mesh of about 70 ppm.

### Example 2 (comparative without phosphate surfactant)

The polymerization of example 1 is repeated but preparing the pre-emulsion replacing the surfactants mixture with 60 g of Dowfax^{®} 2A1 and 54.3 g of Disponil^{®} FES 77.

The dispersion obtained has a pH of 7.8, a viscosity (Brookfield RVT at 20 rpm and at 23°C) of 130 mPa.s, a dry residue of 56.2% by weight (1 h at 105°C) and a pre-coagulate content on a screen of 275 mesh of about 800 ppm.

### Application and characterization of the pressure sensitive adhesive produced polymer dispersions of the examples

The polymer dispersions produced in the previous examples have been characterized for their PSA properties without further formulation (used as such), as follows.

### Peel adhesion and loop tack

The polymer dispersions were applied on PET film and dried at 80°C for a few minutes in order to obtain the same dry weight per unit area of about 20 g/m². Once dried the PET strips were laminated with a siliconized paper (liner). After storing the test strip for 24 hours at 23°C and 50% Relative Humidity, then PET film were coupled with stainless steel and after 20 minutes the 180° peel adhesion was tested according to FINAT FTM1 method.

The tackiness of the applied PSA (loop adhesion) were tested according to FINAT FTM9 method.

### Cohesion

On the test strip prepared in the same way for peel adhesion was also measured the shear strength as a measure of cohesion according to test FINAT FTM 7 method.

### Viscosity

The polymer dispersion viscosities have been measured by using a Brookfield viscometer RVT, at 23°C and 20 rpm, using the appropriate spindle, in order to stay in the allowed torque range for the instrument.

### Dry coaaulum

The method is based on the separation of the filterable solids present in a certain amount of a waterborne polymer dispersions or solutions, by passing it through a stainless steel sieves with known weight, with holes of specific dimensions and then drying it on an oven.

### Thermal stability

### High temperature stability

A perfectly sealed PP bottle, full of the polymer dispersion to be tested, is stored at 60°C for 2 weeks in an oven. Then, its physical chemical properties are measured, the thermal stability has been evaluated by the degree of changes of these characteristics after thermal ageing.

### Low temperature stability

The freeze thaw stability has been carried out exposing the polymer dispersion to 2 cycles of 16 hours at the temperature of -5°C and 8 hours at 23°C and checking the changes in the physical chemical properties of the latex, according to EN1239:1998.

### Shear stability (mechanical stability)

We place 200 g of polymer dispersion in a 90 mm diameter cylindrical jar, we add 2 ml of defoamer (Kemfoamex^{®} 6615), then we stir the product with a cowless stirrer with diameter 63 mm at 3500 rpm for 20 minutes.

We estimate the instability of the dispersions by the increase of their viscosity and dry coagulum on 275 mesh sieves.

The test has been carried out also on samples of the examples taken before final caustic soda addition for neutralization, when the final sample has a pH between 2.0 and 3.0. This in order to underline the effect on the stabilization of the surfactants when the contribution of the salification of the carboxylic acid groups coming from acrylic acid is not present.

### Particle size

The polymer dispersions of the examples were further characterized for their particle size by using a dynamic light scattering MALVERN Zetasizer ZS90.

### Surface Tension

The surface tension of the polymer dispersion of the examples has been measured by using a tensiometer Kruss K11 with a du Nouy ring.

### Comparative tables of results

**Table 1a : polymer dispersion characteristics**

| Example | Surfactants (% on monomers) | pH | Brookfield viscosity at 20 rpm (mPa.s) | Solids (%) | dry coagulum 275 mesh (ppm) | Surface Tension (mN/m) | particle size (nm) unimodal |
|---|---|---|---|---|---|---|---|
| Ex 1 | 0.6% RHODAFAC^{®} | 7.3 | 60 | 55.7 | 70 | 36.3 | 480 |
| | RS710 30 | | | | | | |
| | 0.4% AREOSOL^{®} A102 | | | | | | |
| Ex 2 (comparative) | 0.6% DOWFAX^{®} 2A1 | 7.8 | 130 | 56.2 | 800 | 36.6 | 440 |
| | 0.4% DISPONIL^{®} FES77 | | | | | | |

**Table 2 a : Shear stability on neutralized dispersions**

| Example | Brookfield viscosity at 20 rpm (mPa.s) | dry coagulum 275 mesh (ppm) | p size (nm) unimodal | Brookfield viscosity at 20 rpm (mPa.s) | dry coagulum 275 mesh (ppm) | particle size (nm) unimodal |
|---|---|---|---|---|---|---|
| | Before stirring | | | After stirring | | |
| Ex 1 | 60 | 70 | 489 | 78 | 130 | 543 |
| Ex 2 (comparative) | 130 | 800 | 446 | 740 | 1050 | 582 |

**Table 2 b : Shear stability on acidic dispersion (before final soda addition)**

| Example | Brookfield viscosity at 20 rpm (mPa.s) | dry coagulum 275 mesh (ppm) | Brookfield viscosity at 20 rpm (mPa.s) | dry coagulum 275 mesh (ppm) |
|---|---|---|---|---|
| | Before stirring | | After stirring | |
| Ex 1 | 70 | 80 | 2800 | 1100 |
| Ex 2 (comparative) | 150 | 800 | 9000 | 2100 |

**Table 3 : PSA freeze thaw stability at -5°C**

| Example | Brookfield viscosity at 20 rpm (mPa.s) | dry coagulum 275 mesh (ppm) | Brookfield viscosity at 20 rpm (mPa.s) | dry coagulum 275 mesh (ppm) |
|---|---|---|---|---|
| | Before freezing cycles | | After freezing cycles | |
| Ex 1 | 60 | 70 | 60 | 123 |
| Ex 2 (comparative) | 130 | 800 | 135 | 2780 |

**Table 4 : PSA properties polymer dispersion characteristics**

| Example | Peel SS* 20' | Peel PE** 20' | Loop Tack SS* | Loop Tack PE** | Shear strength (cohesion) |
|---|---|---|---|---|---|
| | (N/25 mm) | (N/25 mm) | (N) | (N) | (h) |
| Ex 1 | 7.5 | 6.8 | 12.3 | 5.5 | 116 |
| Ex 2 (comparative) | 7.0 | 4.5 | 6.7 | 4.2 | 150 |

| | | | | | |
|---|---|---|---|---|---|
| * on stainless steel ** on high density polyethylene | | | | | |

The dispersion according to the present invention (example 1) shows improved thermal stability (low temperature and high temperature stability) and improved mechanical stability with respect to the comparative one (example 2) while at least similar adhesive applicative performances are shown (vs cohesion the difference being not significant) and even some improved adhesive performances are shown (for example vs peel and loop tack).

## Claims

1. Aqueous polymeric dispersion, wherein it comprises emulsion polymerization polymeric particles having a monomeric composition comprising at least one monomer selected from acrylic and vinylic monomers and further comprising a mixture of surfactants comprising :
a) a phosphate surfactant selected from alkoxylated alkyl phosphate ester acids or salts, preferably alkoxylated alkyl phosphate monoester-diacids or salts or from alkoxylated alkyl diphosphate diester-monoacids or salts or a mixture of alkoxylated alkyl phosphate monoester-diacids or salts and alkoxylated alkyl diphosphate diester-monoacids or salts
and at least one of the following surfactants :
b) a surfactant selected from alkoxylated alcohol sulfate metal M salts
c) a surfactant selected from C₄-C₁₈ dialkyl diesters and/or C₄-C₁₈ mono alkyl esters of sulfonated C₄₋C₈ dicarboxylic acid metal M salts
and wherein the polymer of said polymeric particles has a glass transition temperature Tg, as determined by DSC at a second passage at a heat rate of 20°C/min, which is lower than 0°C.

2. The aqueous dispersion of claim 1, wherein the said mixture of surfactants comprises a) and b), preferably with a weight ratio a) / b) varying from 10/90 to 90/10, more preferably from 15/85 to 85/15 and even more preferably from 25/75 to 75/25.

3. The aqueous dispersion of claim 1, wherein the said mixture of surfactants comprises a) and c), preferably with a weight ratio a) / c) varying from 10/90 to 90/10, more preferably from 15/85 to 85/15 and even more preferably from 25/75 to 75/25.

4. The aqueous dispersion of claim 1, wherein the said mixture of surfactants comprises a), b) and c), in particular with weight ratios :
- a) / b) varying from 10/90 to 90/10, preferably from 15/85 to 85/15, more preferably from 25/75 to 75/25 and
- c) / (a) +b)) varying from 5 to 60%, preferably from 10 to 50%, more preferably from 15 to 50%.

5. The aqueous polymer dispersion according to any one of claims 1, 2 and 4, wherein the said alcohol in said surfactant b) is selected from C₈-C₂₂, preferably C₁₀-C₁₈ alcohols.

6. The aqueous polymer dispersion according to any one of claims 1, 3 and 4, wherein said surfactant c) is selected from C₄-C₁₈ dialkyl diester or C₄-C₁₈ mono alkyl ester of sulfosuccinate metal M salts, preferably from C₆-C₁₃ dialkyl diester or C₆-C₁₃ mono alkyl ester of sulfosuccinate metal M salts.

7. The aqueous polymer dispersion according to any one of claims 1 to 6, wherein the polymer of said polymeric particles has a glass transition temperature Tg, as determined by DSC at a second passage at a heat rate of 20°C/min, which is at most -10°C, preferably ranges from -65 to -10°C, more preferably from -65°C to -20°C.

8. The aqueous polymer dispersion according to any one of claims 1 to 7, wherein said surfactant a) is a phosphate diester (I) and/or monoester (II) according to the following formula :
(I)
[RO(R'O)ₙ]₂- P(=O)-O⁻ M⁺ (diester)
(II)
RO(R'O)ₙ- P(=O) [-O⁻ M⁺]₂ (monoester)
with
R being an alkyl in C₈ to C₂₂, preferably C₁₀ to C₁₈, more preferably from C₁₀ to C₁₆
R' being an alkylene from ethylene
n being 2 to 50, preferably from 2 to 40 and more preferably from 2 to 30
M being selected from : hydrogen, sodium, potassium or ammonium
preferably, said surfactant a) being a mixture comprising from 30 to 40% w/w of diester (I) and from 60 to 70% w/w of monoester (II).

9. The aqueous polymer dispersion according to any one of claims 1 to 8, wherein the said polymeric particles comprise at least 50%, preferably at least 60%, more preferably at least 70% w/w monomeric units from an acrylic alkyl ester with an alkyl in C₄-C₁₀, preferably selected from n-, iso- or t-butyl acrylate, 2-ethyl hexyl acrylate, octyl acrylate or isooctyl acrylate, more preferably the alkyl being in C₈.

10. The aqueous polymer dispersion according to any one of claims 1 to 9, wherein the said polymeric particles further comprise from 0.1 to 6% preferably from 0.2 to 4% w/w of monomeric units coming from an acidic and/or a hydroxylated monomer.

11. Use of an aqueous polymer dispersion according to any one of claims 1 to 10 in adhesives or sealants, in particular in adhesives, preferably in pressure sensitive adhesive compositions.

12. Use of an aqueous polymer dispersion according to claim 11, wherein said use is in adhesives for labels.

13. A method for improving the stability at low and high temperature and/or the stability under mechanical shear of an aqueous polymer dispersion, the said method comprising preparing said aqueous polymer dispersion by an emulsion polymerization using as emulsifying system a mixture of surfactants comprising :
a) phosphate surfactant selected from alkoxylated alkyl phosphate ester acids or salts, preferably alkoxylated alkyl phosphate monoester-diacids or salts or from alkoxylated alkyl diphosphate diester-monoacids or salts or a mixture of alkoxylated alkyl phosphate monoester-diacids or salts and alkoxylated alkyl diphosphate diester-monoacids or salts
and at least one of the following surfactants :
b) a surfactant selected from alkoxylated alcohol sulfate metal M salts
c) a surfactant selected from C₄-C₁₈ dialkyl diester and/or C₄-C₁₈ monoesters of sulfosuccinate metal M salts.

14. The method according to claim 13, wherein the said mixture of surfactants comprises a), b) and c), in particular with weight ratios :
- a) / b) varying from 10/90 to 90/10, preferably from 15/85 to 85/15, more preferably from 25/75 to 75/25 and
- c) / (a) +b)) varying from 5 to 60%, preferably from 10 to 50%, more preferably from 15 to 50%

15. The method according to claim 13 or 14, wherein said method further comprises the post-addition of at least one surfactant c) selected from C₄-C₁₈ dialkyl diester of sulfosuccinate metal M salts after the said emulsion polymerization.
